Europäisches Patentamt

European Patent Office

Office européen des brevets

(11) Publication number: **0 104 648**
**B1**

# EUROPEAN PATENT SPECIFICATION

(45) Date of publication of patent specification: **07.02.90**

(21) Application number: **83109627.6**

(22) Date of filing: **27.09.83**

(51) Int. Cl.⁵: **C 02 F 3/12,** C 02 F 3/34,
C 02 F 9/00

(54) **Waste water treatment.**

(30) Priority: **29.09.82 US 427257**

(43) Date of publication of application:
**04.04.84 Bulletin 84/14**

(45) Publication of the grant of the patent:
**07.02.90 Bulletin 90/06**

(84) Designated Contracting States:
**AT BE CH DE FR GB IT LI LU NL SE**

(56) References cited:
**US-A-4 053 399**
**US-A-4 081 365**
**US-A-4 098 689**

CHEMICAL ABSTRACTS, vol. 85, no. 18, 1st
November 1976, page 130062, no. 130052j,
Columbus, Ohio, US; M.V. GASANOV:
"Question of biochemical purification of
industrial waste waters"

CHEMICAL ABSTRACTS, vol. 96, no. 22, 31st
May 1982, page 371, no. 186669k, Columbus,
Ohio, US; P.L. BISHOP et al.: "Rotating
biological contactor treatment of hypersaline
wastes" & PROC. IND. WASTE CONF. 1981 (Pub.
1982). 36th. 644-54

(73) Proprietor: **PHILLIPS PETROLEUM COMPANY**
**5th and Keeler**
**Bartlesville Oklahoma 74004 (US)**

(72) Inventor: **Buchanan, Ben Brevard**
**1543 S. Hickory**
**Bartlesville, OK 74003 (US)**

(74) Representative: **Dost, Wolfgang, Dr.rer.nat.,**
**Dipl.-Chem. et al**
**Patent- und Rechtsanwälte Bardehle-**
**Pagenberg-Dost-Altenburg & Partner Postfach**
**86 06 20**
**D-8000 München 86 (DE)**

(56) References cited:
CHEMICAL ABSTRACTS, vol. 51, no. 16, 25th
August 1957, column 12475, point g, Columbus,
Ohio, US; G.I. VOROB'EVA: "Role of
pseudomonas in petroleum microbiology" &
DOKLADY AKAD. NAUK S.S.S.R. 112, 763-5
(1957)

Courier Press, Leamington Spa, England.

**Description**

This invention relates to the reduction of organic matter present in a polyphenylene sulfide process brine waste water.

The organic matter, commonly called "organics", can be phenols, alcohols, ketones, esters, oligomers, polymer residues, proteins, carbohydrates, and fats. In the production of poly(phenylene sulfide) organics such as easily dispersible low molecular weight poly(phenylene sulfide), poly(phenylene sulfide) by-products, and unreclaimed reactants such as p-dichlorobenzene and N-methyl-2-pyrrolidone (NMP) can accumulate. These organics and possibly others along with excess sodium sulfide and sodium chloride are present in the process brine waste water.

The presence of these organics in brine solutions make it harder to dispose of them than if they were not present. In addition, regulations exist which stipulate the allowable level of Biochemical Oxygen Demand (BOD) and Chemical Oxygen Demand (COD) in surface water discharge. Therefore, processes which then will reduce the level of organic materials in a brine solution are highly desirable.

Chemical Abstract *85* (1976) 130052 j discloses the aerobic biological treatment of saline waste water with microorganisms. Neither bacteria nor poly(phenylene sulfide) process water are mentioned.

Chemical Abstract *96* (1982) 18669 k relates to rotating biological contactor treatment of hypersaline wastes. Neither bacteria nor poly(phenylene sulfide) process waste water are mentioned.

One object of the present invention is to provide a process for the reduction of the organic matter in polyphenylene sulfide process brine waste water.

Other aspects, objects and the several advantages of the present invention will become apparent from this specification and the claims, and the drawing which represent a schematic diagram of the invention.

In accordance with the present invention, it was discovered that the level of organic matter present in an adjusted brine solution from polyphenylene sulfide production is reduced by contacting the adjusted brine solution with an aerated sludge of acclimated, aerobic bacteria under conditions sufficient to effect the reduction to a desired level.

Accordingly the invention relates to a process for reducing the level of organic matter present in a polyphenylene sulfide process brine waste water containing salts, low molecular weight poly(phenylene sulfide), poly(phenylene sulfide)by-products and unclaimed reactants such as p-dichlorobenzene and N-methyl-2-pyrrolidone which process is characterized by adjusting said brine waste water to a salt concentration in the range of 2 to 10 weight percent and a pH of 7.0 to 8, and contacting said adjusted waste water with an aerated sludge of aerobic bacteria acclimated to the above conditions of salt concentration and pH.

In the present invention, an adjusted brine solution is defined to be a solution whose pH and salt concentrations are adjusted to predetermined levels and thereafter maintained at these levels at as near a constant value as possible. This is because microorganisms grow best under constant environmental conditions. The addition of water is most commonly used to regulate the salt concentration value and the use of $H_2SO_4$ is most common for the adjustment of pH concentrations.

Preferably, the pH should be adjusted to about 7.0 to 7.5 as microorganisms have been found to acclimate particularly well to this range.

The brine solution will usually contain at least 2% wt. dissolved salts and more commonly from 2 to 10%. In the present invention, the salt concentration should be maintained at about 3.5 weight percent. The salts referred to in the process of this invention include salts of sodium, magnesium, calcium, barium, potassium, strontium, iron, nickel, and ammonia.

The aerobic bacteria utilized in the process of the present invention are those present in general waste water or industrial water biotreatment process. The majority of these bacteria are gram negative.

Representatives species of bacteria utilized in the process of the present invention include *Escherichia, Proteus, Alcaligenis, Vibrio, Aerobacter, Chromobacterium, Neissina, Pseudomonas, Spirillum,* and *Bacillus.*

Representative species of bacteria utilized in the process of the present invention include *Escherichia coli, Proteus vulgaris, Alcaligenis faecalis, Vibrio Metchnikovii, Aerobacter aerogenes, Chromobacterium prodigiosium, Neissina Catarrhalio, Pseudomonas fluorescens, Spirillum serpens* and *Bacillus brevis.*

The adjusted brine solution is contacted with an aerated sludge of aerobic bacteria under conditions sufficient to reduce the organics to a desired level. Generally the adjusted brine solution is contacted with an aerated sludge of bacteria wherein the oxygen concentration is from 0.20 to 8 mg/liter. The temperature conditions for the contact will be in the range of from −13 to 38°C (9 to 100°F) and the contact time will be in the range of from 0.25 to 10 days or until the desired amount of organic matter is reduced.

Air is introduced into the microbial sludge contained in a tank by any conventional method known in the art, such as in the form of bubbles through diffusion or by turbulent agitation of the liquid by an impeller. The activated sludge process is maintained by returning a certain portion of the sludge that passes through the sludge tank and is settled out in a subsequent sedimentation basin.

The aerobic bacteria are acclimated to the neutral pH and salt concentration conditions existing in the equalization pond before these bacteria are contacted with the brine solution. This is because time is needed for the bacteria to acclimate themselves to the eventual conditions to which they will be subjected. If the bacteria are contacted with a brine solution to whose pH and salt concentration conditions they have not been previously adapted, then there exists the possibility that they will go into shock and therefore be unable to reduce the organic matter in the brine solution.

As is known to one skilled in the art, the process of acclimating microorganisms to particular environmental conditions is a gradual process. At selected time intervals, the organisms are subjected to incremental additions of selected growth media until the total, desired concentration of growth media is achieved. During this process, some of the organisms will be non-viable while others will be able to sustain the growth conditions and multiply. The end result will be that by the time the total concentration by growth media is achieved, a population of viable microorganisms for this growth media will exist.

The bacteria and other solids are normally removed by settling or coagulation and settling. If removals are insufficient further removals can be made by filtration. Filtration can be accomplished by any conventional process such as media bed filtration with or without coagulation; vacuum pressure filtration with or without filter aid, catridge filtration and ultrafiltration.

Additional organic matter may be removed by contacting the brine solution with activated charcoal as illustrated. In this manner, the Chemical Oxygen Demand (COD) is reduced.

In addition, the brine solution may be desalted by well known desalination methods such as reverse osmosis and electrodialysis, optionally, after the brine has passed through an ultrafiltration or other guard filters.

Referring now to FIGURE I, polyphenylene sulfide process washwater containing concentrated brine and various organic substances is passed to an equalization pond where the pH and salt concentrations are subsequently adjusted to near constant levels.

The adjusted brine solution is then contacted with an aerated sludge of aerobic bacteria under appropriate conditions to reduce the amount of organic matter present in the brine solution.

The resulting treated brine solution is then contacted with a coagulant or flocculant, e.g., alum to aid in the settling of particles and is subsequently passed to a clarifier with part of the concentrated sludge passed as recycle to the biological treatment unit and part of it sent to drying beds, incineration, or other solids disposal methods. The supernatant brine is passed from the clarifier to media bed filtration.

Subsequently the filtered brine solution is pased to carbon adsorption columns containing activated carbon wherein the amount of organic matter is further reduced. Effluent from the carbon adsorption columns then passes to ultrafiltration treatment for removal of very small dispersed particles and subsequently to a desalination unit wherein it is desalted by such typical processes as reverse osmosis, ion exchange or electrodialysis. The resulting treated solution should be essentially salt free and thus fresh water in nature.

The following examples further illustrate the present invention:

## EXAMPLES

An experimental program was conducted to determine the effectiveness of activated sludge biological oxidation alone and following partial carbon adsorption on the treatment of polyphenylene sulfide plant process waste water for surface disposal.

## Example I

The plant process waste water contained over 3 wt% sodium chloride, which made it necessary to acclimate bacteria to both the dissolved organics and the salt content of the waste water before evaluating the effectiveness of the biological treatment.

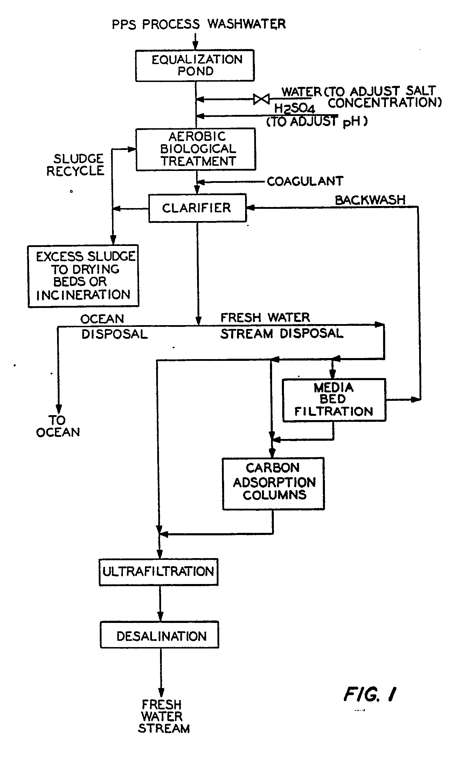

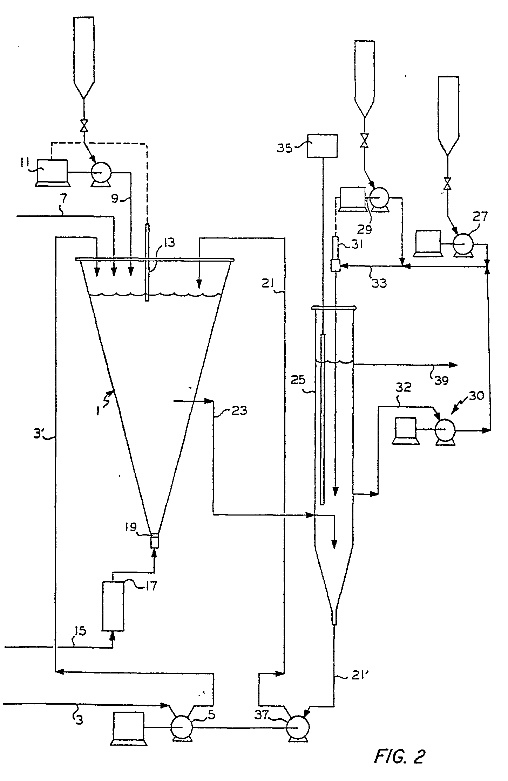

Both the acclimation and biological treatment were carried out in the five-liter, laboratory, activated sludge unit shown in FIGURE 2. The apparatus is composed of a conical glass biodigester, a vertical glass-tube clarifier and auxilliary equipment. Air entering the digester from the bottom is dispersed by a built-in glass frit. The air provides oxygen for the bacteria and complete mixing. Waste water feed, nutrients, and recycle sludge enter the digester from the top. Digester pH was maintained in the 7 to 7.5 pH range by a pH controller. The digester temperature was maintained at about 24°C (75°F).

A more detailed description of the activated sludge unit shown in FIGURE 2 follows:

A modified 8-liter cone-shaped glass perculator (Corning Glassworks, Corning, N.Y.; model number 7040-8L; upper diameter: 219 mm; length: 518 mm) was used as the biodigester (1). The waste water feed (3060 mg/liter Total Organic Carbon, 3.5 weight% NaCl) was charged through lines (3) and (3') by means of an Ultra Masterflex$^{(TM)}$ peristaltic pump (5) (Cole-Palmer Instrument Company, Chicago, Illinois; model C-7555-20) having a pump head designed for a flow range of 0.378-378 ml/hr (Cole-Palmer; model C-7014-00,10). The feed was added at an average rate if about 380 grams per day.

Nutrients (approximately 1 molar solutions of $NH_4Cl$ and $K_2HPO_4$) were added through line (7) so as to provide a 100:5:1 weight ratio of chemical oxygen demand to nitrogen to phosphorus. Approximately 0.5 molar sulfuric acid was charged to the biodigester through line (9) by means of a small peristaltic pump (11) interfaced with a pH sensor (13) so as to maintain a pH of 7—8 in the biodigester. Enough air was introduced through line (15), rotometer (17) and a coarse glass frit (19) at the bottom of the biodigester to keep the aqueous system saturated with air. The bacterial floc was introduced through recycle line (21). The mixed liquor was allowed to flow from a mid-level exit tube (23) into a clarifier tube (25) of about 1 liter capacity, having an upper diameter of 5.08 cm (2 inches) and a length of about 76.2 cm (30 inches).

The clarifier (25) was fitted with a recycle line (32) which exited from the lower portion of the clarifer through a peristaltic pump at a rate of 10 to 30 ml per minute. The return line (33) to the clarifier exited about 5.1 cm (two inches) below its withdrawal point of line (32). Alum and caustic solutions were charged by means of small peristaltic Masterflex pumps (27 and 29) to the recycle line (32). The flow of caustic to the recycle line was controlled by pH sensor (31) to 7.5 pH. The solution mixture was introduced into the clarifier (25) to form an aluminum hydroxide floc that aided in the settling of the bacteria floc from the biodigester. The alum content in the clarifier was maintained at dosages determined by jar tests (100—3000 mg/L). The clarifier content was stirred slowly (~0.3 rpm) with stirrer (35) to mix biodigester effluent and alum flocculant solution. The settled bacteria floc was recycled to the biodigester (1) through line (21') by means of Ultra Masterflex(TM) pump (37) (Cole-Palmer; model C-7555-20) having a pump head designed for a flow range of 6.84—6840 ml/hr (Cole-Palmer; model C-7018-00,-10). The recycle flow rate was about 30—40 ml/min. The effluent from the clarifier tube exited through line (39) and was collected in a large effluent bottle.

## Example II

Gram-negative rod-shaped bacteria contained in an activated sludge of a municipal sewage treatment plant were acclimated to the highly saline waste water of a poly(phenylene sulfide) plant. The acclimation of the bacteria was carried at room temperature over a period of about 2 months in a laboratory treatment unit described in Example I.

About 5 liters of an aqueous bacterial suspension having a mixed liquor suspended solids (MLSS) content of about 3000 mg/liter (determined as Total Suspended Matter according to Procedure 209 D, "Standard Methods" of Water and Waste Water", 15th Edition, 1980; APHA-AWWA-WPCF) and a mixed liquor volatile suspended solids (MLVSS, "Standard Methods" procedure 209 E) content of about 60—88% of the MLSS content were provided. Acetone was fed to the aqueous suspension at a rate of about 0.6 grams per liter per day so as to maintain a COD (Chemical Oxygen Demand, "Standard Methods" Procedure 508 A) loading of about 0.42 g COD/g MLVSS/day, which was equivalent to about 0.5 g COD/g MLSS/day. Nitrogen and phosphorus nutrients were added in the form of aqueous solutions of $NH_4Cl$ and $K_2HPO_4$ so as to give a COD:N:P weight ratio of 100:5:1.

The NaCl concentration of the aqueous system was gradually increased from 0 to about 35 grams per liter (3.5 weight% NaCl) by the incremental addition of 2 grams per liter three times a week.

After an initial period of about 4 weeks, into the aqueous bacteria suspension was fed, for 5 days, a mixture of 1.5 grams per liter per day (g/L·d) of acetone and 54 g/L·d of plant waste water containing about 3060 mg/liter TOC determined by means of an Oceanographic Carbon Analyzer (Oceanographic International Corporation, College Station, Texas). Thereafter, waste water without acetone was increased in two weeks from 100 to 375 g/L·d and continued at 375 g/L·d.

## Example III

Seven aerobic biodigestion runs employing waste water having a pH of 9—9.5, a COD content of 5,000—10,000 mg/liter, a sulfide content of 100—500 mg/liter, and a salt content before adjustment of 3—6 weight percent were carried out, essentially in accordance with the procedure described in Example II. The salt content of the waste water was adjusted to about 3.5 weight percent by adding either NaCl or tap water.

TABLE I

| Run | Feed COD mg/L | Liquid Retention, Days | Loading, Gram COD Gram MLVSS Per Day | Dissolved COD Removal wt% |
|-----|-----|-----|-----|-----|
| 1 | 6300 | 3.8 | 0.7 | 75 |
| 2 | 6300 | 7.8 | 0.5 | 84 |
| 3 | 9400 | 7.2 | 0.6 | 86 |
| 4 | 9400 | 3.3 | 1.1 | 84 |
| 5 | 5800 | 4.8 | 0.7 | 87 |
| 6 | 5800 | 2.8 | 0.9 | 89 |
| 7 | 5720 | 2.7 | 1.0 | 91 |

Data in Table I show that 75—86% of COD can be removed from process waste water by biological treatment in accordance with the process of this invention. Slightly higher COD removal (87—91%) was achieved by prior treatment with activated carbon with the dosage set to remove about 30% of the COD.

Example IV.

In this example the feasibility of removing residual TOC (Total Organic Carbon) from biologically treated waste water is demonstrated. Several samples of biologically treated waste water containing about 750 mg/L COD were mixed with two different types of activated carbon; Nuchar WVG, a bituminous charcoal having a surface area of about 900 $m^2/g$; marketed by the Carbon Department of Westvaco Corporation, Covingtan, Virginia, and Hydrodarco 3000, a lignite-derived charcoal having a surface area of about 600 $m^2/g$ marketed by ICI Americas, Inc., Wilmington, Delaware.

Bottles containing biologically treated waste water and activated charcoal were agitated for about 15 hours by means of a platform shaker operated at a frequency of 2—3 oscillations per second. Results summarized in Table II show that about 76—87% of residual TOC can be recovered by treatment with 1—5 weight percent of activated carbon.

TABLE II

| Type of Activated Carbon | Dosage of Activated Carbon (Weight-%) | TOC Removal From Waste water (Weight-%) |
|---|---|---|
| Nuchar WVG | 0.1 | 31.5 |
| Nuchar WVG | 0.3 | 58.5 |
| Nuchar WVG | 1.0 | 81.1 |
| Nuchar WVG | 5.0 | 87.3 |
| Hydrodarco 3000 | 0.1 | 19.6 |
| Hydrodarco 3000 | 0.3 | 33.6 |
| Hydrodarco 3000 | 1.0 | 75.5 |
| Hydrodarco 3000 | 5.0 | 82.9 |

## Claims

1. A process for reducing the level of organic matter present in a polyphenylene sulfide process brine waste water containing salts, low molecular weight poly(phenylene sulfide), poly(phenylene sulfide) by-products and unclaimed reactants such as p-dichlorobenzene and N-methyl-2-pyrrolidone, characterized by adjusting said brine waste water to a salt concentration in the range of 2 to 10 weight percent and a pH of 7 to 8 and contacting said adjusted waste water with an aerated sludge of aerobic bacteria acclimated to the above conditions of salt concentration and pH.

2. The process of claim 1, characterized in that said aerated sludge of acclimated aerobic bacteria has an oxygen concentration from 0.20 to 8.0 mg $O_2$/liter.

3. The process of claim 1 or 2 characterized in that said contacting is carried out at a temperature from −13 to +38°C.

4. The process of any of claims 1 to 3 characterized in that said contacting is carried out for a period of time from 0.25 hrs. to 10 days.

5. The process of any of claims 1 to 4 characterized in that the resulting reduced brine solution is filtered, in particular by contacting same with activated charcoal.

6. The process of any of claims 1 to 5 characterized in that the salt concentration of the brine solution is reduced by reverse osmosis.

7. The process of any of claims 1 to 6 characterized in that said bacteria are selected from at least one genus of Escherichia, Proteus, Alcaligenis, Vibrio, Aerobacter, Chromobacterium, Neissina, Pseudomonas, Spirillum and Bacillus.

8. The process of claim 7 characterized in that said bacteria are selected from at least one species of Escherichia coli, Proteus vulgaris, Alcaligenis faecalis, Vibrio Metchnikovii, Aerobacter aerogenes, Chromabacterium prodigiosium, Neissina Catarrhalio, Pseudomonas fluorescens, Spirillum serpens and Bacillus brevis.

9. The process of any of the preceding claims characterized in that said brine waste water is adjusted to a pH in the range from 7.0 to 7.5.

## Patentansprüche

1. Verfahren zur Verminderung des Gehalts an organischen Bestandteilen, die in einem Salzlaugen-Abwasser beim Polyphenylensulfidverfahren vorhanden sind, wobei das Abwasser Salze, niedermolekulares Poly-(phenylensulfid), Poly-(phenylensulfid)-Nebenprodukte und nicht-umgesetzte Reaktanten, wie p-Dichlorbenzol und N-Methyl-2-pyrrolidon enthält, dadurch gekennzeichnet, dass man das Salzlaugen-Abwasser auf eine Salzkonzentration im Bereich von 2 bis 10 Gew.-% und einen pH-Wert von 7 bis 8 einstellt und das eingestellte Abwasser mit einem belüfteten Schlamm von aeroben Bakterien, die an die vorstehenden Bedingungen des Salzkonzentration und des pH-Werts angepasst sind, in Kontakt bringt.

2. Verfahren nach Anspruch 1, dadurch gekennzeichnet, dass der belüftete Schlamm der angepassten aeroben Bakterien eine Sauerstoffkonzentration von 0,20 bis 8,0 mg $O_2$/Liter aufweist.

3. Verfahren nach Anspruch 1 oder 2, dadurch gekennzeichnet, dass das Kontaktieren bei einer Temperatur von −13 bis +38°C durchgeführt wird.

4. Verfahren nach einem der Ansprüche 1 bis 3, dadurch gekennzeichnet, dass das Kontaktieren über einen Zeitraum von 0,25 h bis 10 Tage durchgeführt wird.

5. Verfahren nach einem der Ansprüche 1 bis 4, dadurch gekennzeichnet, dass die in Bezug auf den Gehalt an organischen Bestandteilen verringerte Salzlösung filtriert wird, insbesondere indem man sie mit Aktivkohle in Kontakt bringt.

6. Verfahren nach einem der Ansprüche 1 bis 5, dadurch gekennzeichnet, dass die Salzkonzentration der Salzlösung durch umgekehrte Osmose verringert wird.

7. Verfahren nach einem der Ansprüche 1 bis 6, dadurch gekennzeichnet, dass die Bakterien unter mindestens einer Gattung von Escherichia, Proteus, Alcaligenus, Vibrio, Aerobacter, Chromobacterium, Neissina, Pseudomonas, Spirillum und Bacillus ausgewählt sind.

8. Verfahren nach Anspruch 7, dadurch gekennzeichnet, dass die Bakterien unter mindestens einer Spezies der Gruppe Escherichia coli, Proteus vulgaris, Alcaligenis faecalis, Vibrio Metchnikovii, Aerobacter aerogenes, Chromobacterium prodigiosium, Neissina Catarrhalio, Pseudomonas fluorescens, Spirillum serpens und Bacillus brevis ausgewählt sind.

9. Verfahren nach einem der vorstehenden Ansprüche, dadurch gekennzeichnet, dass das Salzlaugen-Abwasser auf einen pH-Wert im Bereich von 7,0 bis 7,5 eingestellt wird.

**Revendications**

1. Procédé pour réduire la teneur en matière organique présente dans une eau usée salée provenant d'un procédé de fabrication de poly(sulfure de phénylène) contenant des sels, du poly(sulfure de phénylène) de masse molaire peu élevée, des sous-produits de poly (sulfure de phénylène) et des réactifs non récupérés comme du p-dichlorobenzène et de la N-méthyl-2-pyrrolidone, caractérisé en ce qu'on règle l'eau usée salée à une concentration en sels comprise entre 2 et 10% en poids et à un pH de 7 à 8 et en ce qu'on met en contact l'eau usée réglée avec une boue aérée de bactéries aérobies acclimatées aux conditions ci-dessus de concentration en sels et de pH.

2. Procédé selon la revendication 1, caractérisé en ce que la boue aérée de bactéries aérobies acclimatées présente une concentration en oxygène de 0.20 à 8,0 mg de $O_2$/litre.

3. Procédé selon la revendication 1 ou 2, caractérisé en ce que l'on met en oeuvre la mise en contact à une température comprise entre −13 et +38°C.

4. Procédé selon l'une quelconque des revendications 1 à 3, caractérisé en ce que l'on met en oeuvre la mise en contact pendant une période de temps comprise entre 0,25 heure et 10 jours.

5. Procédé selon l'une quelconque des revendications 1 à 4, caractérisé en ce que l'on filtre la solution d'eau salée dont on a réduit la teneur en matière organique résultante, en particulier en la mettant en contact avec du charbon actif.

6. Procédé selon l'une quelconque des revendications 1 à 5, caractérisé en ce que l'on réduit la concentration en sels de la solution d'eau salée par osmose inverse.

7. Procédé selon l'une quelconque des revendications 1 à 6, caractérisé en ce que les bactéries sont choisies parmi au moins une des espèces suivantes: Escherichia, Proteus, Alcaligenis, Vibrio, Aerobacter, Chromobacterium, Neissina, Pseudomonas, Spirillum et Bacillus.

8. Procédé selon la revendication 7, caractérisé en ce que ces bactéries sont choisies parmi au moins une des espèces suivantes: Escherichia coli, Proteus vulgaris, Alcaligenis faecalis, Vibrio Metchnikovii, Aerobacter aerogenes, Chromabacterium prodigiosium, Neissina Catarrhalio, Pseudomonas fluorescens, Spirillum serpens et Bacillus brevis.

9. Procédé selon l'une quelconque des revendications précédentes, caractérisé en ce que l'on règle le pH de l'eau usée salée entre 7,0 et 7,5.

PPS PROCESS WASHWATER

EQUALIZATION POND

WATER (TO ADJUST SALT CONCENTRATION)

H2SO4 (TO ADJUST pH)

AEROBIC BIOLOGICAL TREATMENT

SLUDGE RECYCLE

COAGULANT

CLARIFIER

BACKWASH

EXCESS SLUDGE TO DRYING BEDS OR INCINERATION

OCEAN DISPOSAL

FRESH WATER STREAM DISPOSAL

TO OCEAN

MEDIA BED FILTRATION

CARBON ADSORPTION COLUMNS

ULTRAFILTRATION

DESALINATION

FRESH WATER STREAM

FIG. I

1

EP 0 104 648 B1

FIG. 2